# DEMANDE DE BREVET EUROPEEN

(11) **EP 3 342 641 A1**
(43) Date de publication de la demande: **04.07.2018**
(21) Numéro de dépôt: 17208037.6
(22) Date de dépôt: 18.12.2017
(51) Int. Cl.: B60Q 1/26, B60Q 1/52, F21S 43/20, F21S 43/245, F21S 43/13, F21S 43/239, G02B 5/18, F21V 8/00, G03H 1/22, G02B 27/22, G06F 3/14, G02B 27/30, G02B 27/42, G02B 6/124, B60Q 1/38, B60Q 1/44

(54) **DISPOSITIF DE SIGNALISATION POUR VÉHICULE AUTOMOBILE ET PROCÉDÉ DE SIGNALISATION POUR VÉHICULE AUTOMOBILE**

(30) Priorité: 03.01.2017 FR 1750031
(71) Demandeur: Valeo Vision, 93012 Bobigny Cedex (FR)
(72) Inventeur: BOILEVIN, Antoine, 93012 BOBIGNY Cedex (FR); GOSSELE, Frederic, 93012 BOBIGNY Cedex (FR); SANCHEZ, Vanesa, 93012 BOBIGNY Cedex (FR); FLEURY, Benoist, 93012 BOBIGNY Cedex (FR); LIARD, Laurent, 93012 BOBIGNY Cedex (FR); LEBLANC, Francois, 93012 BOBIGNY Cedex (FR)
(74) Mandataire: Valeo Vision

(57) **Abrégé**

L'invention concerne un dispositif de signalisation (1) pour véhicule automobile (300) et mettant en oeuvre au moins un dispositif lumineux (100) agencé pour afficher au moins une image stéréoscopique (121) sur une surface d'affichage (350) dudit véhicule automobile (300), à l'aide d'une source de lumière (40) permettant d'éclairer sélectivement ou collectivement des réseaux de diffraction (13-15) disposés sur ladite surface d'affichage (350) et permettant de réaliser un indicateur de direction et/ou un indicateur d'avertissement et/ou un feu stop. Le dispositif lumineux (100) est piloté par un module de commande et en fonction de l'activation d'une commande d'actionnement du véhicule automobile (300), ladite commande d'actionnement étant associée à un état particulier du véhicule automobile (300) pris en compte par le module de commande.

L'invention concerne aussi un procédé de signalisation comprenant une étape de détection de l'état du véhicule automobile (300) et une étape de pilotage du dispositif de signalisation (1).

## Description

### Domaine technique

La présente invention concerne un dispositif de signalisation lumineux pour véhicule automobile, et plus particulièrement un dispositif de signalisation stéréoscopique pour un tel véhicule automobile. L'invention concerne aussi un procédé de signalisation lumineux pour véhicule automobile.

### État de la technique antérieure

On connait des dispositifs de signalisation pour véhicules automobiles comprenant une source de lumière et une optique de mise en forme afin de générer un faisceau lumineux réglementaire. Ces dispositifs de signalisation sont utilisés notamment pour former des feux indicateurs de direction et/ou des feux stop. Ils prennent ainsi la forme de modules optomécaniques complexes dans lesquels il est nécessaire de réaliser un couplage optique entre la source de lumière et l'optique de mise en forme. En particulier, les optiques de mise en forme de ces dispositifs de signalisation sont des pièces encombrantes et souvent complexes à fabriquer, entrainant des surcoûts pour de tels dispositifs de signalisation.

Par ailleurs, les dispositifs de signalisation connus sont agencés pour émettre des rayons lumineux dans des directions prédéfinies, formant un faisceau lumineux diffus et localisé au niveau dudit dispositif de signalisation correspondant. En d'autres termes, la forme du faisceau lumineux généré par les dispositifs de signalisation connus dépend de la forme desdits dispositifs de signalisation, et plus particulièrement de leurs optiques de mise en forme. Cette configuration est assez contraignante d'une part, puisque pour modifier la forme du faisceau lumineux il est nécessaire de modifier la géométrie de l'optique de mise en forme, ce qui n'est pas toujours facile au regard de certaines considération esthétiques propres aux véhicules automobiles. D'autre part, la visibilité des faisceaux lumineux est, dans un certain sens, réduite car localisée au niveau des dispositifs de signalisation.

La présente invention a pour objet de répondre au moins en grande partie aux problèmes précédents et de conduire en outre à d'autres avantages.

Un autre but de l'invention est de proposer un nouveau dispositif de signalisation pour véhicule automobile afin de résoudre au moins un de ces problèmes.

Un autre but de l'invention est d'améliorer la visibilité du signal lumineux émis par un tel dispositif de signalisation.

### Exposé de l'invention

Selon un premier aspect de l'invention, on atteint au moins l'un des objectifs précités avec un dispositif de signalisation pour véhicule automobile, ledit dispositif de signalisation comprenant (i) une surface d'affichage située sur une surface extérieure du véhicule automobile, (ii) un dispositif lumineux agencé pour afficher au moins une image stéréoscopique sur la surface d'affichage correspondante, l'image stéréoscopique formant au moins un pictogramme lumineux avec une fonction de signalisation, et (iii) un module de commande pour configurer le dispositif lumineux en fonction d'un état du véhicule automobile et/ou d'une commande d'un usager du véhicule.

Ainsi le dispositif de signalisation conforme au premier aspect de l'invention permet de générer au moins une image stéréoscopique en fonction d'un état du véhicule automobile et/ou d'une commande d'un usager du véhicule, afin par exemple d'avertir les autres véhicules automobiles d'une modification de trajectoire et/ou de vitesse et/ou de fonctionnement du véhicule automobile. Le dispositif de signalisation permet ainsi d'améliorer la sécurité de conduite entre plusieurs véhicules en permettant aux autres véhicules d'anticiper ou de prendre en considération un changement imminent de l'état de marche d'un véhicule automobile.

Le dispositif de signalisation conforme au premier aspect de l'invention peut comprendre avantageusement au moins un des perfectionnements ci-dessous, les caractéristiques techniques formant ces perfectionnements pouvant être prises seules ou en combinaison :
- le dispositif lumineux comprend (i) au moins une source de lumière configurée pour pouvoir émettre au moins un rayon lumineux, et (ii) au moins une cellule lumineuse, chaque cellule lumineuse comprenant :
   - un guide d'onde agencé pour transporter au moins une partie de l'au moins un rayon lumineux émis par la source de lumière correspondante entre une première extrémité située du côté de la source de lumière et une deuxième extrémité ;
   - au moins un réseau de diffraction situé au niveau de la deuxième extrémité du guide d'onde, au moins une partie des réseaux de diffraction étant éclairée par l'au moins une partie des rayons lumineux transportés par le guide d'onde afin de générer au moins un lobe de diffraction. Ainsi, chaque réseau de diffraction éclairé génère un lobe de diffraction dans une direction particulière, et tous les réseaux de diffraction d'une cellule lumineuse forment collectivement un pixel lumineux. Finalement, la superposition et/ou l'adjonction de plusieurs cellules lumineuses permettent ainsi de former des images stéréoscopiques formées par la pluralité des pixels lumineux générés par chaque cellule lumineuse éclairée ;
- le dispositif lumineux comprend un collimateur agencé pour coupler optiquement l'au moins une source de lumière avec le guide d'onde. Plus particulièrement, le collimateur comprend au moins une lentille convergente afin de rendre parallèle au moins une partie des rayons lumineux émis par la source de lumière correspondante et afin de faciliter leur injection dans le guide d'onde ;
- un premier réseau de diffraction a des premières caractéristiques dimensionnelles et un deuxième réseau de diffraction a des deuxièmes caractéristiques dimensionnelles différentes des premières caractéristiques dimensionnelles afin de générer des lobes de diffraction différents lorsqu'ils sont éclairés par l'au moins un rayon lumineux. Les caractéristiques dimensionnelles des réseaux de diffraction comprennent notamment la forme générale dudit réseau de diffraction, la forme des « créneaux » formant ledit réseau de diffraction, les différentes dimensions du réseau de diffraction et/ou les différentes dimensions des « créneaux » formant ledit réseau de diffraction ainsi que la distance entre deux « créneaux » directement adjacents. De manière connue, les motifs dimensionnels formant chaque réseau de diffraction représentent une « gravure stéréoscopique » d'une image interférentielle qui, lorsqu'elle est éclairée par une lumière particulière, génère le lobe de diffraction correspondant. La lumière éclairant les réseaux de diffraction est préférentiellement du type d'une lumière cohérente. Ainsi, chaque réseau de diffraction est agencé pour générer un lobe de diffraction correspondant lorsqu'il est soumis à un éclairage incident, de manière connue par l'homme du métier. En particulier, les différents réseaux de diffraction d'une cellule lumineuse du dispositif lumineux sont agencés pour former collectivement un pixel lumineux à partir de chaque lobe de diffraction. Et le contrôle de tout ou partie des cellules lumineuses du dispositif lumineux permet de générer des images stéréoscopiques à partir de chaque pixels lumineux produits par chaque cellule lumineuse. Un contrôle de chaque cellule lumineuse, indépendamment des autres cellules lumineuses du dispositif lumineux, permet de générer plusieurs images stéréoscopiques. En particulier, il est possible de générer des séquences animées d'images stéréoscopiques à partir des pixels lumineux de chaque cellule lumineuse. De manière avantageuse, les réseaux de diffractions comprennent des motifs géométriques permettant d'afficher une image stéréoscopique représentative de la distance séparant le véhicule automobile de l'obstacle détecté ;
- le premier réseau de diffraction et le deuxième réseau de diffraction sont orientés suivant des directions différentes, et notamment l'un par rapport à l'autre. Par orientation, on entend une direction d'orientation principale des motifs dimensionnels du réseau de diffraction correspondant. En d'autres termes, il s'agit de la direction formée par lesdits créneaux et/ou la direction sensiblement perpendiculaire à la direction de répétition des motifs géométriques formant ledit réseau de diffraction ;
- un angle entre les orientations de deux groupes de réseaux de diffraction adjacents est constant ;
- la surface d'affichage comprend un substrat transparent :
   - le guide d'onde d'au moins une partie des cellules lumineuses du dispositif lumineux est au moins partiellement fixé solidairement sur le substrat transparent ;
   - le guide d'onde d'au moins une partie des cellules lumineuses du dispositif lumineux est fixé par collage sur le substrat transparent, préférentiellement à l'aide d'une colle transparente. Alternativement, le guide d'onde d'au moins une partie des cellules lumineuses du dispositif lumineux est fixé par lamination sur le substrat transparent ;
   - le substrat transparent est formé au moins en partie par le guide d'onde d'au moins une des cellules lumineuses du dispositif lumineux ;
   - l'au moins une source de lumière est du type d'une source laser ou d'une diode électroluminescente. Éventuellement, le dispositif lumineux comprend plusieurs sources de lumière émettant chacune des rayons lumineux à des longueurs d'ondes différentes ;
   - l'au moins une source de lumière est du type d'une diode laser ;
   - l'au moins une source de lumière comprend une première source de lumière émettant au moins un rayon lumineux d'une première couleur, par exemple rouge, une deuxième source de lumière émettant au moins un rayon lumineux d'une deuxième couleur, par exemple verte, et une troisième source de lumière émettant au moins un rayon lumineux d'une troisième couleur, par exemple bleu. D'une manière plus générale, les première, deuxième et troisième sources de lumière peuvent prendre n'importe quelle couleur ; en d'autres termes, chaque source de lumière peut émettre une lumière de n'importe quelle longueur d'onde visible.
- le dispositif lumineux comprend un moyen de multiplexage optique agencé pour éclairer sélectivement chaque réseau de diffraction de chaque cellule lumineuse. Le moyen de multiplexage optique permet d'orienter au moins une partie des rayons lumineux générés par l'au moins une source de lumière vers au moins une partie des réseaux de diffraction d'une ou plusieurs cellules lumineuses. Alternativement, le moyen de multiplexage optique est agencé pour éclairer sélectivement chaque groupe de réseaux de diffraction, tous les réseaux de diffraction étant collectivement adressés par le moyen de multiplexage optique.
- le moyen de multiplexage optique comprend une pluralité de déflecteurs pilotables, agencés pour pouvoir prendre au moins une première configuration permettant d'orienter une partie des rayons lumineux vers au moins une partie des réseaux de diffraction d'une des cellules lumineuses et une deuxième configuration permettant de ne pas éclairer ladite au moins une partie des réseaux de diffraction de ladite une des cellules lumineuses du dispositif lumineux. À titre d'exemples non limitatifs, le moyen de multiplexage optique peut comprendre au moins un miroir réfléchissant ou semi-réfléchissant et/ou au moins une lentille et/ou une pluralité de miroirs basculant entre deux configurations angulaires différentes. Le moyen de multiplexage optique comprend aussi une pluralité d'actionneurs pilotables et permettant de sélectionner sélectivement ou collectivement le ou les réseaux de diffraction à éclairer afin de générer le lobe de diffraction correspondant et de permette de générer in fine une image stéréoscopique particulière ;
- le dispositif lumineux comprend un obturateur optique situé à l'aplomb d'au moins une partie des cellules lumineuses, ledit obturateur optique étant au moins configurable dans une première configuration dans laquelle au moins un des lobes de diffraction formés par l'un des réseaux de diffraction d'une cellule lumineuse et/ou les pixels lumineux formés par tous les réseaux de diffraction d'une cellule lumineuse sont transmises au travers dudit obturateur optique, et une deuxième configuration dans laquelle au moins un des lobes de diffraction formés par l'un des réseaux de diffraction d'une cellule lumineuse et/ou les pixels lumineux formés par tous les réseaux de diffraction d'une cellule lumineuse sont absorbées par ledit obturateur optique. Ainsi, l'obturateur optique permet de sélectionner les pixels lumineux générés par les cellules lumineuses et qui seront « visibles » par un utilisateur du dispositif lumineux. En d'autres termes, l'obturateur optique joue le rôle d'un filtre spatial permettant de construire des images stéréoscopiques en sélectionnant les pixels lumineux transmis par ledit obturateur optique ;
- l'obturateur optique comprend une pluralité de cellules d'obturation pouvant être configurées sélectivement ou collectivement dans la première et la deuxième configuration ;
- l'obturateur optique est formé d'un écran à cristaux liquides. Alternativement, l'obturateur optique est formé d'un écran de technologie d'électro-mouillage ;
- le dispositif de signalisation forme un feu indicateur de direction, l'au moins une source de lumière du dispositif lumineux étant agencée pour émettre un pictogramme de couleur ambrée. De préférence, le dispositif lumineux est agencé pour générer un pictogramme dont au moins une partie des caractéristiques satisfait les dispositions réglementaires, telles que définies par exemple dans le règlement R6 en Europe ;
- le dispositif de signalisation forme un feu stop, l'au moins une source de lumière du dispositif lumineux étant agencée pour émettre un pictogramme de couleur rouge ;

Selon un deuxième aspect de l'invention, il est proposé un procédé de signalisation pour véhicule automobile à l'aide d'au moins un dispositif de signalisation selon l'une quelconque des revendications précédentes, caractérisé en ce qu'il comprend les étapes suivantes :
- détection d'un état du véhicule automobile ou d'une commande d'un usager du véhicule ;
- configuration du dispositif lumineux par le module de commande afin de générer au moins une image stéréoscopique associée à l'état du véhicule automobile formant au moins un pictogramme lumineux avec une fonction de signalisation sur une surface d'affichage située sur une surface extérieure du véhicule automobile.

Le procédé de signalisation conforme au deuxième aspect de l'invention peut comprendre avantageusement au moins un des perfectionnements ci-dessous, les caractéristiques techniques formant ces perfectionnements pouvant être prises seules ou en combinaison :
- le module de commande configure le dispositif lumineux afin de produire un effet de défilement de l'image stéréoscopique correspondante sur la surface d'affichage. Par effet de défilement on comprend qu'une ou plusieurs images stéréoscopiques - représentant chacune un pictogramme par exemple - glissent selon une ou plusieurs directions caractéristiques de la surface d'affichage, chaque image stéréoscopique étant suivie par une autre image stéréoscopique - représentant éventuellement un autre pictogramme par exemple. À titre d'exemple non limitatif, dans le cas d'un indicateur de direction, l'image stéréoscopique générée par le dispositif lumineux peut défiler depuis une direction médiane du véhicule automobile vers une direction extérieure au véhicule automobile, indiquant ainsi la direction vers laquelle le véhicule automobile va tourner ;
- le module de commande configure le dispositif lumineux afin de produire un effet de déplacement de l'image stéréoscopique correspondante sur la surface d'affichage. Par un effet de déplacement, on comprend qu'une ou plusieurs images stéréoscopiques formées parle dispositif lumineux sont animées d'un mouvement de translation et/ou d'un mouvement courbe sur la surface d'affichage. À titre d'exemple non limitatif, dans le cas d'un indicateur de direction, l'image stéréoscopique générée par le dispositif lumineux peut se déplacer depuis une direction médiane du véhicule automobile vers une direction extérieure au véhicule automobile, indiquant ainsi la direction vers laquelle le véhicule automobile va tourner ;
- le module de commande configure le dispositif lumineux afin de produire un effet dynamique de l'image stéréoscopique correspondante sur la surface d'affichage ;
- le module de commande configure le dispositif lumineux afin de produire une transformation homothétique de l'image stéréoscopique correspondante sur la surface d'affichage. La transformation homothétique peut former par exemple un effet de gonflement ou une contraction de l'image stéréoscopique affichée par le dispositif lumineux, en fonction d'un état de fonctionnement du véhicule automobile. Par exemple, la transformation homothétique peut être dépendante de l'intensité de freinage du véhicule automobile : plus l'intensité de freinage est forte, plus l'image stéréoscopique générée est grossie par gonflement homothétique ; a contrario, pour un freinage décroissant, l'image stéréoscopique est contractée afin de traduire visuellement cet effet.

Selon un troisième aspect de l'invention, il est proposé un véhicule automobile équipé d'un système de signalisation conforme au premier aspect de l'invention ou selon l'un quelconque de ses perfectionnements et/ou comprenant des moyens agencés pour mettre en oeuvre un procédé de signalisation conforme au deuxième aspect de l'invention.

Le véhicule automobile conforme au troisième aspect de l'invention peut comprendre avantageusement au moins un des perfectionnements ci-dessous, les caractéristiques techniques formant ces perfectionnements pouvant être prises seules ou en combinaison :
- la surface d'affichage de l'au moins un dispositif de signalisation est située à l'arrière du véhicule automobile. Cette configuration avantageuse permet de générer un dispositif de signalisation complémentaires aux indicateurs de direction et/ou aux feux stops d'un véhicule automobile ;
- la surface d'affichage de l'au moins un dispositif de signalisation est formée par au moins une partie de la lunette arrière du véhicule automobile. Cette configuration avantageuse permet de générer un dispositif de signalisation complémentaires aux indicateurs de direction et/ou aux feux stops d'un véhicule automobile ;
- l'au moins un dispositif de signalisation forme un feu indicateur de direction et/ou un feu stop. Cette configuration avantageuse permet de remplacer les indicateurs de direction et/ou les feux stops existants d'un véhicule automobile par des dispositifs de signalisation plus performants et plus visibles par les autres véhicules automobiles.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue schématique d'un exemple de réalisation de cellule lumineuse agencée pour générer une pluralité d'images stéréoscopiques dans plusieurs directions ;
- la FIGURE 2 illustre une vue schématique en coupe d'un exemple de réalisation de dispositif lumineux permettant de sélectionner une partie des images stéréoscopiques générées par une cellule lumineuse telle qu'illustrée sur la FIGURE 1 ;
- la FIGURE 3 illustre une utilisation du dispositif lumineux équipant le dispositif de signalisation conforme au premier aspect de l'invention pour réaliser un feu indicateur de direction ;
- la FIGURE 4 illustre une utilisation du dispositif lumineux équipant le dispositif de signalisation conforme au premier aspect de l'invention pour réaliser un feu d'avertissement ;
- la FIGURE 5 illustre une utilisation du dispositif lumineux équipant le dispositif de signalisation conforme au premier aspect de l'invention pour réaliser un feu stop.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

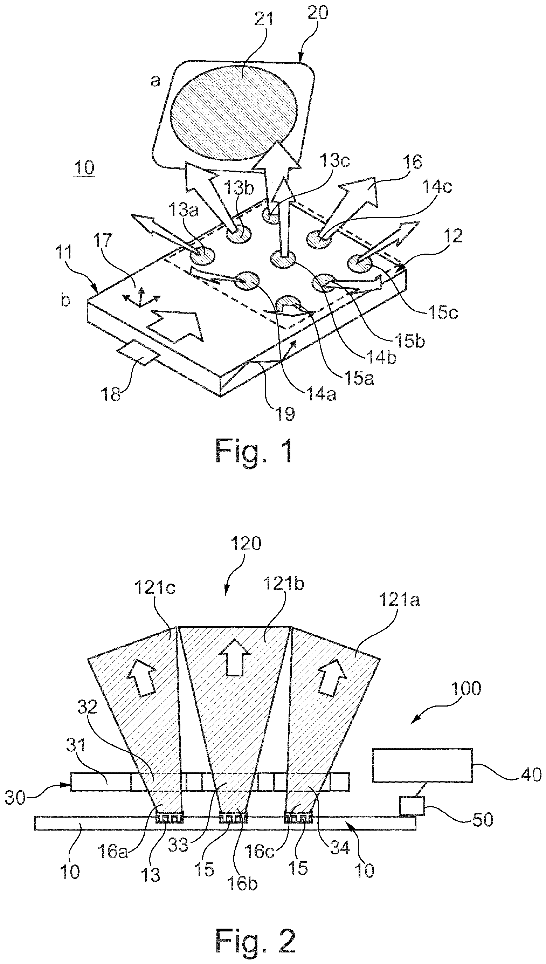

La FIGURE 1 illustre un exemple de réalisation d'une cellule lumineuse 10 d'un dispositif lumineux 100 équipant un dispositif de signalisation conforme au premier aspect de l'invention et permettant de générer une pluralité d'images en trois dimensions, visibles à l'intérieur d'une zone de vision 120 très large pouvant s'étendre jusqu'à 180°. Le dispositif lumineux 100 est agencé pour générer les images tridimensionnelles de manière simultanée ou séquentielle et selon des directions et des orientations différentes.

Plus particulièrement, le dispositif lumineux 100 comprend une pluralité de cellules lumineuses 10, chaque cellule lumineuse 10 mettant en oeuvre une pluralité de réseaux de diffraction orientés dans une direction particulière. À cet effet, le dispositif lumineux 100 comprend :
- au moins une source de lumière, préférentiellement de type électroluminescente, agencée pour générer au moins un rayon lumineux 18 ;
- une pluralité de cellules lumineuses 10 couplées optiquement à la source de lumière par l'intermédiaire d'au moins un collimateur, chaque cellule lumineuse 10 comprenant :
   ∘ un guide d'onde 17 prenant la forme d'un film au moins en partie transparent et de faible épaisseur à l'intérieur duquel l'au moins un rayon lumineux incident 19 est propagé ;
   ∘ un premier groupe de réseaux de diffraction 13a-13c formés sur une surface du guide d'onde 17 et orienté suivant une première direction ;
   ∘ un deuxième groupe de réseaux de diffraction 14a-14c formés sur la surface du guide d'onde 17 et orienté suivant une deuxième direction ;
   ∘ un troisième groupe de réseaux de diffraction 15a-15c formés sur la surface du guide d'onde 17 et orienté suivant une troisième direction ;

Chaque cellule lumineuse 10 et/ou chaque réseau de diffraction 13-15 d'une cellule lumineuse 10 peut être adressé sélectivement ou collectivement à l'aide de moyens de multiplexages non visibles sur la FIGURE 1. Éventuellement, les cellules lumineuses 10 et/ou la pluralité de réseaux de diffraction 13-15 peut aussi être collectivement ou sélectivement modulée grâce à un obturateur 30 externe non décrit sur la FIGURE 1 et qui sera détaillé en référence à la FIGURE 2. La fréquence de modulation est préférentiellement de l'ordre d'une fréquence vidéo, c'est-à-dire de plusieurs dizaines ou centaines de Hertz.

Chaque réseau de diffraction 13-15 est gravé sur une même surface du guide d'onde 17 ou fixé solidairement sur ladite surface dudit guide d'onde 17, préférentiellement par collage. Bien entendu, les caractéristiques morphologiques et/ou dimensionnelles de chaque réseau de diffraction 13-15 dépendent de l'image tridimensionnelle à former. En d'autres termes, chaque réseau de diffraction 13-15 est gravé de manière à générer une image particulière lorsqu'il est éclairé par l'au moins une partie des rayons lumineux incidents19 générés par l'au moins une source de lumière.

À l'intérieur du guide d'onde 17, les rayons lumineux 18 générés par la source de lumière se propagent et sont appelés rayons lumineux incidents 19 lorsqu'ils illuminent au moins un des réseaux de diffraction.

Le guide d'onde 17 est agencé pour permettre aux rayons lumineux 18 générés par l'au moins une source de lumière de se propager à l'intérieur dudit guide d'onde 17, par réflexion interne totale. Plus particulièrement, chaque source de lumière est couplée optiquement au guide d'onde 17 au niveau d'une zone de collimation 11 par l'intermédiaire d'un collimateur par exemple ou par l'intermédiaire d'un réseau de diffraction, non représenté sur la FIGURE 1, afin qu'au moins une partie des rayons lumineux 18 générés par la source de lumière correspondante soient introduits dans ledit guide d'onde 17. Les rayons lumineux incidents 19 se propagent à l'intérieur de la zone de collimation 11 et en direction de la pluralité des réseaux de diffraction.

Lorsque les rayons lumineux incidents 19 arrivent au niveau d'un réseau de diffraction 13-15, ils interagissent avec le réseau de diffraction 13-15 correspondant et sont diffractés, formant des lobes de diffraction 16 dans une direction donnée par l'orientation du réseau de diffraction et le sens d'illumination dudit réseau de diffraction.

Dans le cas où la cellule lumineuse 10 comprend plusieurs réseaux de diffraction 13-15, chaque réseau de diffraction éclairé génère un lobe de diffraction correspondant dans une direction particulière conditionnée par l'orientation du réseau de diffraction correspondant. Ainsi, un observateur peut recevoir dans son oeil droit une partie des rayons appartenant à un premier groupe de lobes de diffraction, et dans son oeil gauche des rayons appartenant à un deuxième groupe de lobes de diffraction. Le premier groupe de lobes lumineux et le deuxième groupe de lobes lumineux d'une formés par les réseaux de diffraction d'une cellule lumineuse forment collectivement un pixel lumineux visible par l'observateur. Les intensités des lobes de diffraction n'étant pas les mêmes, il est possible de générer un effet stéréoscopique volumétrique, faisant apparaître à l'observateur le pixel lumineux de la cellule lumineuse 10 dans une position proximale ou distale par rapport au guide d'onde 11.

Pour une orientation donnée du réseau de diffraction 13-15, un éclairage par un premier côté du réseau de diffraction 13-15 produit un premier lobe de diffraction ; et un éclairage par un deuxième côté du même réseau de diffraction 13-15 produit un second lobe de diffraction. Le pixel lumineux correspondant aux lobes de diffraction produits par les réseaux de diffraction 13-15 de la cellule lumineuse 10 apparait ainsi comme étant situé soit devant, soit derrière le plan du guide d'onde 11. Il est ainsi possible de produire un effet de battement du point lumineux par la simple alternance de la direction depuis laquelle les réseaux de diffraction 13-15 sont éclairés.

La génération sur le même guide d'onde 11 de plusieurs cellules lumineuses 10 (non représentées sur la FIGURE 1) permet de créer plusieurs pixels lumineux, qui forment collectivement une image stéréoscopique pour l'observateur.

Par ailleurs, les réseaux de diffraction 13-15 sont conçus pour une longueur d'onde (source 18) donnée, de manière à pouvoir interagir avec des rayons lumineux produits par une source de lumière correspondante à la même longueur d'onde. Il est possible de générer sur le même guide d'onde 17 plusieurs réseaux de diffraction correspondant à plusieurs longueurs d'onde différentes, et en particuliers trois réseaux de diffraction correspondant à trois longueurs d'ondes différentes, ou trois groupes de réseaux de diffraction, chaque groupe de réseaux de diffraction étant conçu pour l'une des trois longueurs d'ondes données. En variant la direction d'incidence des différentes sources lumineuses, il est ainsi possible de générer trois images de couleur différente, simultanément ou alternativement.

Il est ainsi possible de générer des images tridimensionnelles en couleur sans utiliser des filtres de couleurs et de manière plus simple à l'aide d'un dispositif lumineux 100 complètement transparent. Consécutivement, il est aussi possible de réaliser des séquences animées de plusieurs images tridimensionnelles d'une manière très simple.

À titre d'exemple non limitatif, la cellule lumineuse 10 illustrée sur la FIGURE 1 comprend un substrat en verre jouant le rôle de guide d'onde 17, à la surface duquel une couche de nitrure de silicium est déposée, préférentiellement par dépôt en phase vapeur électrochimique, et préférentiellement encore suivant une épaisseur de 100 nm. Les réseaux de diffraction 13-15 sont gravés à la surface de la couche de nitrure de silicium par des méthodes connues de lithographie.

La FIGURE 1 illustre une vue par microscopie électronique à balayage d'un réseau de diffraction 20 d'une telle cellule lumineuse 10 d'un dispositif lumineux. Le réseau de diffraction 20 est fabriqué par des techniques classiques de photolithographie et comprend une pluralité de créneaux 21 tous parallèles et orientés suivant une direction principale, chaque créneau 21 étant rectiligne.

Par ailleurs, la FIGURE 1 illustre de manière schématique les différents lobes de diffraction 16 projetés par chaque réseau de diffraction d'une cellule lumineuse 10 du dispositif lumineux 100. La cellule lumineuse 10 est éclairée par une lumière collimatée 18 formée des rayons lumineux qui sont générés par une source de lumière non représentée. Chaque réseau de diffraction 13-15 ainsi éclairé disperse les rayons lumineux correspondants 18 par diffraction au premier ordre : chaque réseau de diffraction 13-15 forme un lobe de diffraction résultant de l'interaction des rayons lumineux incidents 19 avec la forme des créneaux dudit réseau de diffraction 13-15. Chaque réseau de diffraction 13-15 forme un lobe de diffraction 16 dans une direction particulière, les directions particulières de tous les réseaux de diffraction 13-15 de la cellule lumineuse 10 formant la zone de vision 120. Tous les lobes de diffraction 16 d'une cellule lumineuse forment un pixel lumineux.

Ainsi, un dispositif lumineux comprenant une pluralité de cellules lumineuses 10 telles qu'illustrée sur la FIGURE 1 permet de générer une pluralité d'images statiques tridimensionnelles, sous l'effet de l'éclairage des réseaux de diffraction 13-15 correspondants par une lumière collimatée.

La FIGURE 2 illustre un exemple de réalisation d'un dispositif lumineux 100 comprenant une pluralité de cellules lumineuses 10 telles que décrites précédemment. La pluralité de cellules lumineuses 10 est éclairée par une source de lumière 40. La source de lumière 40 est couplée optiquement aux cellules lumineuses 10 par l'intermédiaire d'un collimateur 50. Le dispositif lumineux 100 comprend aussi un obturateur 30 situé à l'aplomb des cellules lumineuses 10. L'obturateur 30 est agencé pour permettre d'occulter tout ou partie d'un plan transverse à la propagation des lobes de diffraction 16 et/ou des pixels lumineux générés par les cellules lumineuses 10. Plus particulièrement, l'obturateur 30 comprend une pluralité de cellules d'obturation 31-34, chaque cellule d'obturation 31-34 pouvant être pilotée sélectivement ou collectivement par rapport aux autres cellules d'obturation 31-34. L'obturateur 30 est piloté par un module de commande non représenté afin de configurer chaque cellule d'obturation 31-34 dans une configuration passante ou dans une configuration bloquante, chaque cellule d'obturation 31-34 comprenant des électrodes reliées électriquement audit module de commande afin de pouvoir les polariser électriquement.

Dans la configuration passante, la cellule d'obturation 31-34 correspondante a un coefficient de transmission maximal, et préférentiellement sensiblement égal à 1, afin d'être transparente ou quasi transparente et de laisser passer le(s) lobe(s) de diffraction formé(s) par une partie des réseaux de diffraction 13-15 situé en dessous. Dans la configuration bloquante, la cellule d'obturation 31-34 correspondante a un coefficient de transmission minimal, et préférentiellement sensiblement égal à zéro, afin d'être opaque ou quasi opaque et d'absorber les rayons lumineux diffractés par une partie des réseaux de diffraction 13-15 situé en dessous.

La configuration passante d'une cellule d'obturation 31-34 est obtenue pour une première valeur du champ électrique appliqué entre ses bornes, par exemple pour un potentiel électrique haut, correspondant à une tension de polarisation non nulle. A contrario, la configuration bloquante d'une cellule d'obturation 31-34 est obtenue pour une deuxième valeur du champ électrique appliqué entre ses bornes, par exemple pour un potentiel électrique minimal, correspondant à une tension de polarisation nulle ou minimale.

Les cellules d'obturation 31-34 sont pilotées par le module de commande de manière à être configurées dans l'une ou l'autre des configurations précédentes pour sélectionner un ou plusieurs lobes de diffraction et/ou pixels lumineux formés par les réseaux de diffraction 13-15 situés en dessous. Ainsi, une modulation des cellules d'obturation 31-34 permet de sélectionner séquentiellement une pluralité de lobes de diffraction 16a-16c et/ou une pluralité de pixels lumineux formés par les réseaux de diffraction 13-5 situés en dessous, permettant ainsi de produire un effet visuel dynamique d'images tridimensionnelles 121a-121c.

À titre d'exemple non limitatif, l'obturateur 30 peut avantageusement prendre la forme d'un écran à cristaux liquides, chaque cellule d'obturation 31-34 étant formée par une cellule à cristaux liquide pouvant être configurée dans une configuration passante ou une configuration bloquante en fonction du champ électrique appliqué entre ses bornes. En particulier l'obturateur 30 peut préférentiellement être du type d'un écran à électromouillage.

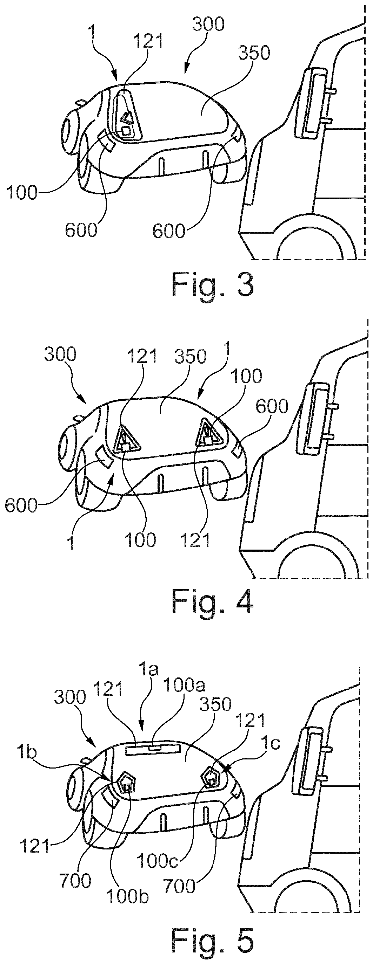

Les FIGURES 3 à 5 illustrent des exemples d'application sur un véhicule automobile 300 d'un dispositif de signalisation 1 conforme au premier aspect de l'invention, et mettant en oeuvre un dispositif lumineux 100 permettant de générer au moins une image stéréoscopique 121. Dans chacun des cas d'application, un module de commande non représenté est prévu pour configurer le dispositif lumineux 100 afin de permettre l'affichage d'au moins une image stéréoscopique 121 en fonction d'une détection d'une commande d'actionnement du véhicule automobile 300.

Tel que décrit précédemment, chacun des usages d'application suivants est mis en oeuvre par une première étape de détection d'un état du véhicule automobile 300 afin de détecter la commande d'actionnement qui a été actionnée par le conducteur ou un utilisateur du véhicule automobile 300, et par une deuxième étape de configuration du dispositif lumineux 100 par le module de commande afin de générer au moins une image stéréoscopique 121 associée à l'état du véhicule automobile 300.

Par commande d'actionnement, on comprend tout dispositif d'interaction entre le véhicule automobile 300 et son utilisateur. À titre d'exemple non limitatif il peut s'agir de n'importe quelle commande située dans l'habitacle dudit véhicule automobile 300, et plus spécifiquement sur le tableau de bord, ou sur un dispositif de commande à distance du véhicule automobile 300, tel qu'une clef de démarrage par exemple. De manière plus spécifique, les commandes d'actionnement peuvent prendre la forme d'une manette d'actionnement des indicateurs de direction, d'une manette d'actionnement des indicateurs d'avertissement, de la pédale de frein ou de la commande d'actionnement du frein de stationnement. Chaque commande d'actionnement est agencée pour prendre au moins deux configurations différentes, chaque configuration étant associée à un état particulier du véhicule automobile 300.

Le dispositif lumineux 100 appliqué dans chacun de ces cas est agencé pour afficher une pluralité d'images stéréoscopiques dans au moins deux directions différentes sur la surface d'affichage 350, pour former au moins un pictogramme lumineux avec une fonction de signalisation.

Tel que décrit précédemment, et afin de générer la pluralité d'images stéréoscopiques 121, le dispositif lumineux 100 comprend avantageusement (i) au moins une source de lumière configurée pour pouvoir émettre au moins un rayon lumineux et au moins une cellule lumineuse, chaque cellule lumineuse comprenant (i) un guide d'onde agencé pour transporter au moins une partie de l'au moins un rayon lumineux émis par la source de lumière correspondante entre une première extrémité située du côté de la source de lumière et une deuxième extrémité, et (ii) une pluralité de groupes de réseaux de diffraction situés au niveau de la deuxième extrémité du guide d'onde, au moins une partie des réseaux de diffraction étant éclairée par l'au moins une partie des rayons lumineux transportés par le guide d'onde afin de générer au moins un lobe de diffraction, l'ensemble des lobes de diffraction générés par les réseaux de diffraction éclairés formant l'au moins une image stéréoscopique.

Selon l'invention, le module de commande est configuré pour détecter le changement d'état d'au moins une partie des commandes d'actionnement du véhicule automobile 300. Selon une première variante de réalisation, la mise en oeuvre d'une des commandes d'actionnement génère simultanément ou concomitamment l'envoi d'un signal spécifique en direction du module de commande qui configure ensuite le dispositif de signalisation 1 en fonction de l'état du véhicule automobile 300 associé à la configuration correspondante de la commande d'actionnement. Selon une deuxième variante de réalisation, le module de commande communique avec une unité centrale du véhicule automobile 300 afin de détecter la modification d'un état de véhicule liés à la modification d'une configuration d'au moins une partie des commandes d'actionnement dudit véhicule automobile 300.

La FIGURE 3 illustre l'utilisation du dispositif lumineux 100 équipant le dispositif de signalisation 1 conforme au premier aspect de l'invention pour réaliser un feu indicateur de direction d'un véhicule automobile 300.

Dans l'exemple illustré, le dispositif lumineux 100 est monté sur une face arrière du véhicule automobile 300, et plus particulièrement sur la lunette arrière 350, au moins une partie de ladite lunette arrière 350 formant la surface d'affichage du dispositif lumineux 100. En particulier, le guide d'onde et la pluralité de groupes de réseaux de diffraction sont situés au niveau de la lunette arrière 350 afin de générer les images stéréoscopiques 121 correspondantes au niveau de ladite lunette arrière 350. Bien entendu, le dispositif lumineux 100 permet de générer au moins une image stéréoscopique 121 tel que décrit précédemment.

Le dispositif lumineux 100 est piloté par un module de commande non représenté et permettant de générer au moins une image stéréoscopique 121 lorsqu'une commande d'actionnement des indicateurs de direction est actionnée par le conducteur du véhicule automobile 300. Dans l'exemple illustré sur la FIGURE 3, c'est l'indicateur de direction « à gauche » qui a été représenté suite à l'actionnement de la commande d'actionnement « clignotant à gauche » par le conducteur du véhicule automobile 300.

En fonction des images stéréoscopiques 121 à générer, le module de commande configure la ou les sources de lumières du dispositif lumineux 100 et adresse le ou les réseaux de diffraction correspondants afin de générer lesdites images stéréoscopiques 121 correspondantes. Les sources de lumière sont du type sources laser, émettant préférentiellement une lumière cohérente, éventuellement de couleurs différentes. Les sources lasers peuvent être situées à proximité de la surface d'affichage ou déportées et reliées optiquement aux réseaux de diffractions par des guides de lumières à l'intérieur du véhicule automobile 300.

Le dispositif lumineux 100 située à gauche de la lunette arrière 350 du véhicule automobile 300 est alors configuré pour émettre une première série d'images stéréoscopiques 121 permettant de rendre visible l'intention du conducteur du véhicule automobile 300 de tourner à gauche. Bien évidemment, un tel véhicule automobile 300 comprend un autre dispositif lumineux 100 situé sur la partie droite de la lunette arrière 350 afin de permettre de rendre visible l'intention du conducteur de tourner à droite lorsque la commande d'actionnement correspondante est activée.

Dans l'exemple illustré sur la FIGURE 3, l'activation de la commande d'un usager de l'actionnement de l'indicateur de direction est traduite par la génération d'au moins une image stéréoscopique 121 prenant la forme d'au moins un pictogramme représentant un point d'exclamation à l'intérieur d'un triangle. À cet effet, une première série d'images stéréoscopiques 121 est par exemple affichée dans une première direction donnant la perception que lesdites images stéréoscopiques 121 sont situées dans un plan situé en avant de la lunette arrière 350, renforçant la perception du pictogramme lumineux par les autres usagers situés à proximité du véhicule automobile 300.

Un tel effet est obtenu grâce à au moins une cellule lumineuse dont au moins une partie des réseaux de diffraction sont éclairés par des rayons lumineux émis par les sources de lumière correspondantes et polarisées électriquement à cet effet. Les rayons lumineux émis par les sources de lumière se propagent à l'intérieur du guide d'onde pour parvenir au niveau d'un ou plusieurs groupes de réseaux de diffraction et selon un premier angle d'incidence. L'interaction entre les rayons lumineux et le ou les groupes de réseaux de diffraction produit plusieurs lobes de diffraction. Bien entendu, chaque réseau de diffraction comprend des structures dimensionnelles particulières formant un et un seul lobe de diffraction lorsqu'il est éclairé par des rayons lumineux des sources de lumière. L'ensemble des lobes de diffraction générés par les réseaux de diffraction éclairés forment collectivement l'au moins une image stéréoscopique

On comprend que la mise en oeuvre du dispositif lumineux 100 au voisinage d'une surface d'affichage appropriée, notamment en mettant le guide d'onde et la face sur laquelle sont formées les réseaux de diffraction en regard de ladite surface d'affichage, permet l'affiche d'image(s) stéréoscopique(s) 121 particulièrement efficace en terme d'information à communiquer aux autres usagers, ces images stéréoscopiques 121 pouvant prendre la forme de pictogramme(s) et/ou de message(s) écrits au contenu sans équivoque pour l'utilisateur.

À intervalle de temps régulier, le dispositif lumineux 100 peut être piloté par le module de commande pour qu'il émette une deuxième série d'images stéréoscopiques, rendant dynamique le message transmis sur la surface d'affichage. À titre d'exemple, la deuxième série d'images stéréoscopiques peut être identique à la première série d'images stéréoscopiques, mais la deuxième série d'images stéréoscopiques est affichée dans une deuxième direction, différente de la première direction, et donnant la perception à l'utilisateur que la deuxième série d'images stéréoscopiques est située plus à droite que la première série d'images.

Un tel effet est obtenu grâce à au moins une cellule lumineuse dont au moins une partie des réseaux de diffraction sont éclairés par des rayons lumineux émis par les sources de lumière correspondantes et polarisées électriquement à cet effet. Les rayons lumineux émis par les sources de lumière se propagent à l'intérieur du guide d'onde pour parvenir au niveau d'un ou plusieurs groupes de réseaux de diffraction et selon un deuxième angle d'incidence. Les réseaux de diffraction sont éclairés depuis une deuxième direction différente de la première direction d'éclairage afin de produire des deuxièmes lobes de diffraction, mais dans une direction sensiblement différente, afin de donner l'impression que l'image stéréoscopique s'est déplacée.

Bien entendu, d'autre effets peuvent être réalisés sur les images stéréoscopiques générées à l'aide d'un tel système d'avertissement lumineux, tels que par exemple des effets de défilement, de gonflement, de contraction, de pivotement, des variations de couleurs...

Comme décrit précédemment, une image stéréoscopique 121 générée par un réseau de diffraction du dispositif lumineux 100 est statique lorsque le dispositif lumineux 100 est configuré par le module de commande 310 pour éclairer de manière invariante le réseau de diffraction correspondant sous un angle d'incidence donné. A contrario, une image stéréoscopique 121 générée par un réseau de diffraction du dispositif lumineux 100 est dynamique lorsque le dispositif lumineux 100 est configuré par le module de commande 310 pour éclairer successivement une pluralité de réseaux de diffraction afin de générer une successivement plusieurs images stéréoscopiques 121 statiques, ou lorsque le dispositif lumineux 100 est configuré par le module de commande 310 pour éclairer simultanément plusieurs réseaux de diffraction dans une pluralité de directions et pour filtrer spatialement certaines des images stéréoscopiques 121 statiques ainsi générées. Ainsi, dans cette deuxième variante de réalisation d'images stéréoscopiques dynamiques, l'évolution dynamique d'un obturateur multizones situé au-dessus de la surface d'affichage permet de configurer un coefficient de transmission pour chaque zone dudit obturateur et de transmettre ou de bloquer au moins une image stéréoscopique générée par le réseau de diffraction correspondant situé en dessous. Le pilotage dynamique de l'obturateur multizones, par l'intermédiaire d'instructions générées par le module de commande, permet de sélectionner une ou plusieurs zones dans lesquelles l'image stéréoscopique statique correspondante générée par le réseau de diffraction situé directement en dessous est transmise, et donc visible. De manière analogue, le pilotage dynamique de l'obturateur multizones permet de sélectionner une ou plusieurs zones dans lesquelles l'image stéréoscopique statique correspondante générée par le réseau de diffraction situé directement en dessous est bloquée, et donc non visible.

Dans l'exemple illustré sur la FIGURE 3, le dispositif de signalisation 1 est situé sur la lunette arrière 350 du véhicule automobile 300, afin d'être visible par au moins une partie des usagers situés derrière ledit véhicule automobile 300. Éventuellement, le dispositif de signalisation est situé simultanément sur une face arrière du véhicule automobile 300 et sur un côté du véhicule automobile 300.

De manière avantageuse, le dispositif de signalisation 1 formant ici un indicateur de direction se substitue aux indicateurs de directions connus des véhicules automobiles, c'est-à-dire ceux formés par les modules de signalisation comprenant au moins une source lumineuse et une optique de mise en forme. Cependant, afin notamment de répondre aux exigences réglementaires qui encadrent les indicateurs de direction, le dispositif de signalisation 1 peut compléter les indicateurs de direction connus afin de renforcer la perception du message lumineux généré par lesdits indicateurs de position.

Ainsi, sur la FIGURE 3, un indicateur de direction connu 600 a été représenté sur le véhicule automobile 300, le dispositif de signalisation 1 pouvant ainsi être activé simultanément à l'activation dudit indicateur de direction connu 600, ou en remplacement de l'indicateur de direction connu 600.

De manière analogue, la FIGURE 4 illustre une utilisation du dispositif lumineux 100 équipant le dispositif de signalisation 1 conforme au premier aspect de l'invention pour réaliser un feu d'avertissement.

Dans cet exemple de réalisation, et selon une première variante de réalisation, le dispositif de signalisation 1 comprend deux dispositif lumineux 100 situés à proximité de deux côtés latéraux opposés de la lunette arrière 350 du véhicule automobile 300. Selon une deuxième variante, le véhicule automobile 300 comprend deux dispositifs de signalisation 1 formant respectivement un indicateur de direction « à gauche » et situé sur le côté gauche de la lunette arrière 350, et un indicateur de direction « à droite » situé sur le côté droit de la lunette arrière 350, telle qu'illustrée sur la FIGURE 4.

Les caractéristiques techniques décrites précédemment, et notamment en référence à la FIGURE 3, ainsi que le fonctionnement du dispositif de signalisation 1 décrit précédemment et notamment en référence à la FIGURE 3 s'appliquent mutatis mutandis à l'exemple d'utilisation du dispositif de signalisation illustré sur la FIGURE 4. En particulier, les caractéristiques et le fonctionnement du module de commande, ainsi que son interaction avec le dispositif lumineux 100 d'une part, et les caractéristiques techniques ainsi que le fonctionnement du dispositif lumineux 100 et son intégration sur ou au voisinage de la lunette arrière 350 du véhicule automobile 300 d'autre part, tels que décrits précédemment et en référence à la FIGURE 3, s'appliquent mutatis mutandis à l'exemple d'utilisation du dispositif de signalisation illustré sur la FIGURE 4.

De manière analogue, la FIGURE 5 illustre une utilisation du dispositif lumineux 100 équipant le dispositif de signalisation 1 conforme au premier aspect de l'invention pour réaliser un feu stop.

Dans cet exemple de réalisation, et selon une première variante de réalisation, le véhicule automobile 300 comprend trois dispositifs de signalisation 1 formant respectivement un premier feu stop situé sur le côté gauche de la lunette arrière 350, un deuxième feu stop situé sur le côté droit de la lunette arrière 350, et un troisième feu stop situé sur un côté supérieur de la lunette arrière 350, tel qu'illustré sur la FIGURE 4. Selon une deuxième variante, le dispositif de signalisation 1 comprend trois dispositif lumineux 100 dont deux sont situés à proximité de deux côtés latéraux opposés de la lunette arrière 350 du véhicule automobile 300 et un est situé au niveau d'un côté supérieur de la lunette arrière 350.

Dans cet exemple d'utilisation, les dispositif lumineux 100 sont tous commandés simultanément par un module de commande commun ou par leurs modules de commandes respectifs.

Les caractéristiques techniques décrites précédemment, et notamment en référence à la FIGURE 3, ainsi que le fonctionnement du dispositif de signalisation 1 décrit précédemment et notamment en référence à la FIGURE 3 s'appliquent mutatis mutandis à l'exemple d'utilisation du dispositif de signalisation illustré sur la FIGURE 5. En particulier, les caractéristiques et le fonctionnement du module de commande, ainsi que son interaction avec les dispositif lumineux 100 d'une part, et les caractéristiques techniques ainsi que le fonctionnement du dispositif lumineux 100 et son intégration sur ou au voisinage de la lunette arrière 350 du véhicule automobile 300 d'autre part, tels que décrits précédemment et en référence à la FIGURE 3, s'appliquent mutatis mutandis à l'exemple d'utilisation du dispositif de signalisation illustré sur la FIGURE 4.

De manière avantageuse, les indicateurs de direction et/ou les indicateurs d'avertissement et/ou les feux stops du véhicule automobile 300 illustré aux FIGURES 3 à 5 peuvent être réalisés selon plusieurs architectures comprises dans la présente invention.

Selon une première architecture, le véhicule automobile 300 comprend une ou plusieurs sources de lumière reliées optiquement aux cellules lumineuses des dispositifs lumineux par des guides d'ondes déployés dans ledit véhicule automobile 300. De manière avantageuse, le véhicule automobile 300 comprend un seul groupe de source(s) de lumière alimentant toutes les cellules lumineuses des dispositifs lumineux du ou des dispositifs de signalisations mis en oeuvre sur le véhicule automobile. Par exemple, les sources lumineuses peuvent être logées dans coffre du véhicule automobile, et reliées aux cellules lumineuses par des fibres optiques ou des guides d'onde plastiques. Ainsi, chaque « fonction optique » est assurée par un groupe de réseaux de diffraction formant plusieurs cellules lumineuses qui collaborent ensemble pour former les différents indicateurs de direction et/ou indicateurs d'avertissement et/ou feux stops du véhicule automobile 300, tous les réseaux de diffraction étant éclairées sélectivement ou collectivement par un groupe commun de source(s) de lumière.

Alternativement, selon une deuxième architecture, chaque indicateur de direction et/ou indicateur d'avertissement et/ou feu stop du véhicule automobile forme en tant que tel un dispositif de signalisation 1 conforme au premier aspect de l'invention, comprenant notamment sa ou ses propres sources de lumière.

De manière analogue, le pilotage électronique des indicateurs de direction et/ou des indicateurs d'avertissement et/ou des feux stops du véhicule automobile 300 peut être réalisé de manière centralisée par un module de commande commun à tous les dispositifs de signalisation, ou chaque dispositif de signalisation peut être piloté par un module de commande spécifique.

De manière avantageuse, une surface d'affichage du véhicule automobile 300 peut comprendre une pluralité de cellules lumineuses comprenant des réseaux de diffraction spécifiques permettant de générer des images stéréoscopiques spécifiques à l'indicateur choisi (feu stop et/ou indicateur de direction et/ou indicateur d'avertissement). Les moyens de multiplexage optique permettent d'éclairer sélectivement l'une ou l'autre des cellules lumineuses afin de générer l'une ou l'autre des images stéréoscopiques associées à l'un des indicateurs précédemment décrits au travers des FIGURES 3 à 5. Cette configuration avantageuse permet de réduire l'encombrement nécessaire pour l'intégration de ces différentes fonctions optiques correspondantes aux dispositifs de signalisation décrits précédemment.

En synthèse, l'invention concerne un dispositif de signalisation pour véhicule automobile et mettant en oeuvre au moins un dispositif lumineux agencé pour afficher au moins une image stéréoscopique sur une surface d'affichage dudit véhicule automobile, à l'aide d'une source de lumière permettant d'éclairer sélectivement ou collectivement des réseaux de diffraction disposés sur ladite surface d'affichage et permettant de réaliser un indicateur de direction et/ou un indicateur d'avertissement et/ou un feu stop. Le dispositif lumineux est piloté par un module de commande et en fonction de l'activation d'une commande d'actionnement du véhicule automobile, ladite commande d'actionnement étant associée à un état particulier du véhicule automobile pris en compte par le module de commande.

L'invention concerne aussi un procédé de signalisation comprenant une étape de détection de l'état du véhicule automobile et/ou d'une commande d'un usager du véhicule, comme l'actionnement d'un levier d'indicateur de direction ou la réalisation d'un freinage, et une étape de pilotage du dispositif de signalisation.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Dispositif de signalisation (1) pour véhicule automobile (300), ledit dispositif de signalisation (1) comprenant :
- une surface d'affichage (350) située sur une surface extérieure du véhicule automobile (300) ;
- un dispositif lumineux (100) agencé pour afficher au moins une image stéréoscopique (121) sur la surface d'affichage (350) correspondante, l'image stéréoscopique (121) formant au moins un pictogramme lumineux avec une fonction de signalisation,
- un module de commande pour configurer le dispositif lumineux (100) en fonction d'un état du véhicule automobile (300) et/ou d'une commande d'un usager du véhicule.

2. Dispositif de signalisation (1) selon la revendication précédente, **caractérisé en ce que** le dispositif lumineux (100) comprend :
- au moins une source de lumière (40) configurée pour pouvoir émettre au moins un rayon lumineux ;
- au moins une cellule lumineuse (10), chaque cellule lumineuse (10) comprenant :
∘ un guide d'onde (17) agencé pour transporter au moins une partie de l'au moins un rayon lumineux émis par la source de lumière (40) correspondante entre une première extrémité située du côté de la source de lumière (40) et une deuxième extrémité ;
∘ au moins un réseau de diffraction (13-15) situé au niveau de la deuxième extrémité du guide d'onde (17), au moins une partie des réseaux de diffraction (13-15) étant éclairée par l'au moins une partie des rayons lumineux transportés par le guide d'onde (17) afin de générer au moins un lobe de diffraction.

3. Dispositif de signalisation (1) selon la revendication 2, **caractérisé en ce que** le dispositif lumineux (100) comprend un collimateur (50) agencé pour coupler optiquement l'au moins une source de lumière (40) avec le guide d'onde (17).

4. Dispositif de signalisation (1) selon l'une quelconque des revendications 2 à 3, **caractérisé en ce qu'**un premier réseau de diffraction (13-15) a des premières caractéristiques dimensionnelles et un deuxième réseau de diffraction (13-15) a des deuxièmes caractéristiques dimensionnelles différentes des premières caractéristiques dimensionnelles afin de générer des lobes de diffraction différents lorsqu'ils sont éclairés par l'au moins un rayon lumineux.

5. Dispositif de signalisation (1) selon la revendication précédente, **caractérisé en ce que** le premier réseau de diffraction (13-15) et le deuxième réseau de diffraction (13-15) sont orientés suivant des directions différentes.

6. Dispositif de signalisation (1) selon l'une quelconque des revendications 2 à 5, **caractérisé en ce que** l'au moins une source de lumière (40) est du type d'une source laser ou d'une diode électroluminescente.

7. Dispositif de signalisation (1) selon la revendication précédente, **caractérisé en ce que** l'au moins une source de lumière (40) comprend :
- une première source de lumière (40) émettant au moins un rayon lumineux d'une première couleur ;
- une deuxième source de lumière (40) émettant au moins un rayon lumineux d'une deuxième couleur ;
- une troisième source de lumière (40) émettant au moins un rayon lumineux d'une troisième couleur.

8. Dispositif de signalisation (1) selon l'une quelconque des revendications précédentes, **caractérisé en ce que** le dispositif lumineux (100) comprend un moyen de multiplexage optique agencé pour éclairer sélectivement chaque cellule lumineuse.

9. Dispositif de signalisation (1) selon l'une quelconque des revendications précédentes, **caractérisé en ce que** le dispositif lumineux (100) comprend un obturateur optique (30) situé à l'aplomb d'au moins une partie des cellules lumineuses, ledit obturateur optique (30) étant configurable dans une première configuration dans laquelle les images stéréoscopiques (121) formées par la ou les cellules lumineuses correspondantes sont transmises au travers dudit obturateur optique (30), et une deuxième configuration dans laquelle les images stéréoscopiques (121) formées par la ou les cellules lumineuses correspondantes sont absorbées par ledit obturateur optique (30).

10. Dispositif de signalisation (1) selon l'une quelconque des revendications précédentes, **caractérisé en ce qu'**il forme un feu indicateur de direction, l'au moins une source de lumière (40) du dispositif lumineux (100) étant agencée pour émettre un pictogramme de couleur ambrée.

11. Dispositif de signalisation (1) selon l'une quelconque des revendications précédentes, **caractérisé en ce qu'**il forme un feu stop, l'au moins une source de lumière (40) du dispositif lumineux (100) étant agencée pour émettre un pictogramme de couleur rouge.

12. Procédé de signalisation pour véhicule automobile (300) à l'aide d'au moins un dispositif de signalisation (1) selon l'une quelconque des revendications précédentes, **caractérisé en ce qu'**il comprend les étapes suivantes :
- détection d'un état du véhicule automobile (300) ou d'une commande d'un usager du véhicule ;
- configuration du dispositif lumineux (100) par le module de commande afin de générer au moins une image stéréoscopique (121) formant au moins un pictogramme lumineux avec une fonction de signalisation sur une surface d'affichage (350) située sur une surface extérieure du véhicule automobile (300).

13. Procédé de signalisation selon la revendication précédente, **caractérisé en ce que** le module de commande configure le dispositif lumineux (100) afin de produire un effet de défilement de l'image stéréoscopique (121) correspondante sur la surface d'affichage (350).

14. Procédé de signalisation selon l'une quelconque des revendications 12 ou 13, **caractérisé en ce que** le module de commande configure le dispositif lumineux (100) afin de produire un effet de déplacement de l'image stéréoscopique (121) correspondante sur la surface d'affichage (350).

15. Procédé de signalisation selon l'une quelconque des revendications 12 à 14, **caractérisé en ce que** le module de commande configure le dispositif lumineux (100) afin de produire un effet dynamique de l'image stéréoscopique (121) correspondante sur la surface d'affichage (350).

16. Procédé de signalisation selon l'une quelconque des revendications 12 à 15, **caractérisé en ce que** le module de commande configure le dispositif lumineux (100) afin de produire une transformation homothétique de l'image stéréoscopique (121) correspondante sur la surface d'affichage (350).

17. Véhicule automobile (300) équipé d'au moins un dispositif de signalisation (1) selon l'une quelconque des revendications 1 à 11 ou comprenant des moyens configurés pour mettre en oeuvre toutes les étapes d'un procédé de signalisation selon l'une quelconque des revendications 12 à 16.

18. Véhicule automobile (300) selon la revendication précédente, **caractérisé en ce que** la surface d'affichage (350) de l'au moins un dispositif de signalisation (1) est située à l'arrière du véhicule automobile (300).

19. Véhicule automobile (300) selon la revendication précédente, **caractérisé en ce que** la surface d'affichage (350) de l'au moins un dispositif de signalisation (1) est formée par au moins une partie de la lunette arrière du véhicule automobile (300).

20. Véhicule automobile (300) selon la revendication précédente, **caractérisé en ce que** l'au moins un dispositif de signalisation (1) forme un feu indicateur de direction et/ou un feu stop.
